# EUROPÄISCHE PATENTSCHRIFT

(11) **EP 1 398 510 B1**
(45) Veröffentlichungstag und Bekanntmachung des Hinweises auf die Patenterteilung: **27.04.2005**
(21) Anmeldenummer: 02020021.8
(22) Anmeldetag: 06.09.2002
(51) Int. Cl.: F04D 29/42, F04D 13/06, F04D 29/58, H02K 5/20

(54) **Nasslaufkreiselpumpenaggregat**
Wet running rotary pump unit
Unité d'une pompe centrifuge à rotor mouillé

(43) Veröffentlichungstag der Anmeldung: 17.03.2004
(73) Patentinhaber: Grundfos a/s, 8850 Bjerringbro (DK)
(72) Erfinder: Kjaer, Oluf, 8850 Bjerringbro (DK); Laursen, Pia, Stenholt, 8230 Abyhoj (DK)
(74) Vertreter: Vollmann, Heiko, Dipl.-Ing.

(56) Entgegenhaltungen:
- EP-A- 0 357 913
- EP-A- 1 211 783
- EP-A- 1 211 784
- DE-A- 2 528 808
- US-A- 4 086 508

## Beschreibung

Die Erfindung betrifft ein Nasslaufkreiselpumpenaggregat mit den im Oberbegriff des Anspruchs 1 angegebenen Merkmalen.

Nasslaufkreiselpumpenaggregate dieser Art werden beispielsweise als Heizungsumwälzpumpen millionenfach in der Welt eingesetzt. Sie arbeiten üblicherweise mit einem Asynchronmotor, dessen Rotor aus einem auf der Motorwelle sitzenden Rotorblechpaket gebildet ist, das nahe seinem Umfang mit Ausnehmungen versehen ist, in welche aus Kupfer oder Aluminium bestehende Kurzschlussstäbe eingeführt sind, die endseitig mit einer Abschlussplatte oder einem Abschlussring durch Schweiβen oder Nieten verbunden sind. Um einerseits den Stator vor der Förderflüssigkeit zuverlässig zu schützen, andererseits jedoch eine Kühlung des Motors und Schmierung insbesondere des motorseitigen Wellenlagers zu gewährleisten, ist ein Spaltrohr vorgesehen, das den Rotorraum, der entweder mit Förderflüssigkeit oder einer anderen Flüssigkeit gefüllt sein kann, gegenüber dem Stator abdichtet. Dieses Spaltrohr wird üblicherweise aus austenitischem, nicht rostendem Stahlblech hergestellt. Trotz zahlreicher Detailverbesserungen ist der Wirkungsgrad dieser mit Asynchronmotor arbeitenden Pumpenaggregate motorseitig mit wirtschaftlich vertretbarem Aufwand praktisch nicht mehr zu steigern. Insofern günstiger sind Permanentmagnetmotoren, welche jedoch mit dem vom Netz zur Verfügung stehenden Wechselstrom nicht ohne weiteres betreibbar sind. Es ist hierzu regelmäßig eine Umrichterelektronik erforderlich, welche die Herstellungskosten erheblich erhöht.

Aus DE 25 28 808 C2 ist es bekannt, zur Verbesserung des Wirkungsgrades eines Asynchronmotors ein magnetisch leitendes Spaltrohr einzusetzen. Doch hat sich diese Maßnahme insbesondere bei Kreiselpumpenaggregaten als wenig praktikabel erwiesen, da die Wirkungsgradsteigerungen eher gering sind, der fertigungstechnische Aufwand jedoch hoch, da nämlich die dort angegebenen Werkstoffe für eine kostengünstige Großserienfertigung wenig geeignet sind.

Es zählt zum Stand der Technik, die Kurzschlussstäbe im Rotor durch Gießen von Aluminium oder einer Aluminiumlegierung zu bilden, allerdings ist dieses Verfahren recht aufwändig, so dass es nur bei Motoren mittlerer Größe, nicht jedoch den hier in Rede stehenden Asynchronmotoren kleiner Größe eingesetzt wird. Darüber hinaus ist auch hierbei die Wirkungsgradverbesserung marginal.

Vor diesem Hintergrund liegt der vorliegenden Erfindung die Aufgabe zugrunde, ein gattungsgemäßes Nasslaufkreiselpumpenaggregat mit wirtschaftlich vertretbarem Aufwand in seinem Wirkungsgrad zu steigern.

Diese Aufgabe wird gemäß der Erfindung durch die in Anspruch 1 angegebenen Merkmale gelöst. Vorteilhafte Ausgestaltungen der Erfindung sind in den Unteransprüchen, der nachfolgenden Beschreibung sowie den Figuren angegeben.

Die erfindungsgemäße Lösung sieht zur Wirkungsgradverbesserung mehrere konstruktive Maßnahmen vor, die sich in ihrer Wirkung synergetisch ergänzen, die also in ihrer Kombination in der Wirkungsgradsteigerung über die Summe der Einzelmaßnahmen deutlich hinausgehen. Dabei werden die Kurzschlussstäbe durch Kupfer oder eine Kupferlegierung gebildet, die in das Rotorblechpaket eingegossen werden, so dass ein hoher spaltfreier Füllgrad innerhalb des Rotorblechpaketes dieses hochleitenden Werkstoffes entsteht. Dadurch, dass zugleich auch das Spaltrohr aus ferritischem, rostfreiem Stahl gebildet wird, wird nicht nur eine zusätzliche Wirkungsgradsteigerung des Motors erreicht, sondern darüber hinaus auch der Effekt, dass der aufgrund der Kurzschlussstabvergussmaßnahme erhöhte magnetische Fluss auch besser durch das Spaltrohr hindurchgelangt. Auf diese Weise jedenfalls kann der Wirkungsgrad eines Nasslaufkreiselpumpenaggregats der eingangs genannten Gattung, insbesondere auch kleiner bzw. mittlerer Leistung zwischen 50 und 250 Watt, so weit verbessert werden, dass er dem heute gebräuchlicher Gleichstrompermanentmagnetmotoren nicht nachsteht. Dabei sind in Weiterbildung der Erfindung Maßnahmen vorgesehen, welche eine wirtschaftliche Fertigung ermöglichen, insbesondere die Fertigung in vorhandenen Fertigungslinien, ohne größere Eingriffe vorzunehmen.

Bevorzugt ist das Rotorblechpaket, was an sich bekannt ist, verschränkt ausgebildet. Da das Verschränken anders als beim Stand der Technik, bei dem die Rotorstäbe zunächst eingeführt und endseitig befestigt werden, bevor die eigentliche Verschränkung erfolgt, vor dem Herstellen der Rotorstäbe erfolgt, kann zum einen die Verschränkung des Rotorblechpaketes wesentlich genauer und gleichmäßiger als beim Stand der Technik erfolgen und zum anderen der gesamte im Rotorblechpaket gebildete Freiraum durch Vergussmasse ausgefüllt werden. Der Verdrehwinkel zwischen benachbarten Blechen kann also bei der erfindungsgemäßen Konstruktion mit wesentlich höherer Genauigkeit eingehalten werden als bei Konstruktionen, bei denen die Kurzschlussstäbe in das Rotorblechpaket eingepresst werden. Durch den höheren Füllgrad wird der leitende Querschnitt, der magnetische Fluss und somit auch der Wirkungsgrad verbessert. Darüber hinaus wird durch die gleichmäßige Verschränkung ein ruhiger und vergleichsweise geräuscharmer Lauf bei hohem Wirkungsgrad gewährleistet.

Um die Rotorstäbe endseitig kurzzuschließen, wird üblicherweise eine Kupferscheibe oder ein Kupferring zu beiden Seiten des Rotorblechpaketes aufgebracht, welche leitend mit den Rotorstäben verbunden sind. Gemäß der Erfindung werden diese Rotorringe ebenso wie die Rotorstäbe durch Verguss gebildet. Es können also Rotorringe und Rotorstäbe in einem Arbeitsgang hergestellt werden. Hierdurch wird nicht nur eine hervorragende Leitung erreicht, sondern darüber hinaus auch ein fester und formschlüssiger Verbund des gesamten Rotorblechpaketes.

Bevorzugt wird das Spaltrohr in Form eines Spaltrohrtopfes ausgebildet, da dann keine gesonderte Wellenabdichtung zum Motor hin erforderlich ist. Diese an sich vorteilhafte konstruktive Maßnahme ist in der Großserienfertigung nur dann wirtschaftlich möglich, wenn der Spaltrohrtopf weitgehend durch Formänderungsarbeit aus einem Blech hergestellt werden kann. Dies ist jedoch bei ferritischen Werkstoffen bisher nur bedingt möglich gewesen. Die Erfindung sieht hierzu in einer Weiterbildung gemäß den Ansprüchen 5 bis 9 eine Legierung vor, die dies trotz der ferritischen, d. h. gut magnetisch leitfähigen Eigenschaft und der Korrosionsfestigkeit gewährleistet. Eine solche Legierung weist zwischen 15 und 20 Gewichtsprozent, vorzugsweise zwischen 16 und 18 Gewichtsprozent Chrom auf, hat einen Kohlenstoffgehalt von 0,01 bis 0,05, vorzugsweise zwischen 0,02 und 0,04 Gewichtsprozent und einen Nickelanteil unter 1 Gewichtsprozent. Es kann auch auf Nickel ganz verzichtet werden. Daneben können weitere Legierungselemente wie Mangan, Molybdän, Titan, Niob sowie auch Silizium in der Legierung vorhanden sein, deren Gesamtanteil soll jedoch 3 Gewichtsprozent nicht überschreiten.

Da der Rotor üblicherweise in der Förderflüssigkeit läuft und eine Korrosion des Rotorblechpakets zuverlässig zu vermeiden ist, da schon geringste Ablagerungen den Lauf des Rotors blockieren würden, geht man mehr und mehr dazu über, den Rotor vollständig durch einen Blechmantel zu kapseln, um so die innerhalb des Rotors liegenden Bauteile besser im Hinblick auf die magnetischen Eigenschaften optimieren zu können. Bei dieser Konstruktion kann eine weitere Wirkungsgradsteigerung dadurch erzielt werden, dass auch der zur Kapselung des Rotors eingesetzte Blechmantel aus nicht rostendem, ferritischem Stahl gebildet ist. Es können hierzu Bleche eingesetzt werden, welche aus den vorerwähnten Werkstoffen bestehen.

Die Erfindung ist nachfolgend anhand eines in der Zeichnung dargestellten Ausführungsbeispiels näher erläutert. Es zeigen:
- Fig. 1: in vereinfachter Darstellung einen Längsschnitt durch ein Nasslaufkreiselpumpenaggregat,
- Fig. 2: in vergrößerter Darstellung den Kupfervergusskörper des Rotors,

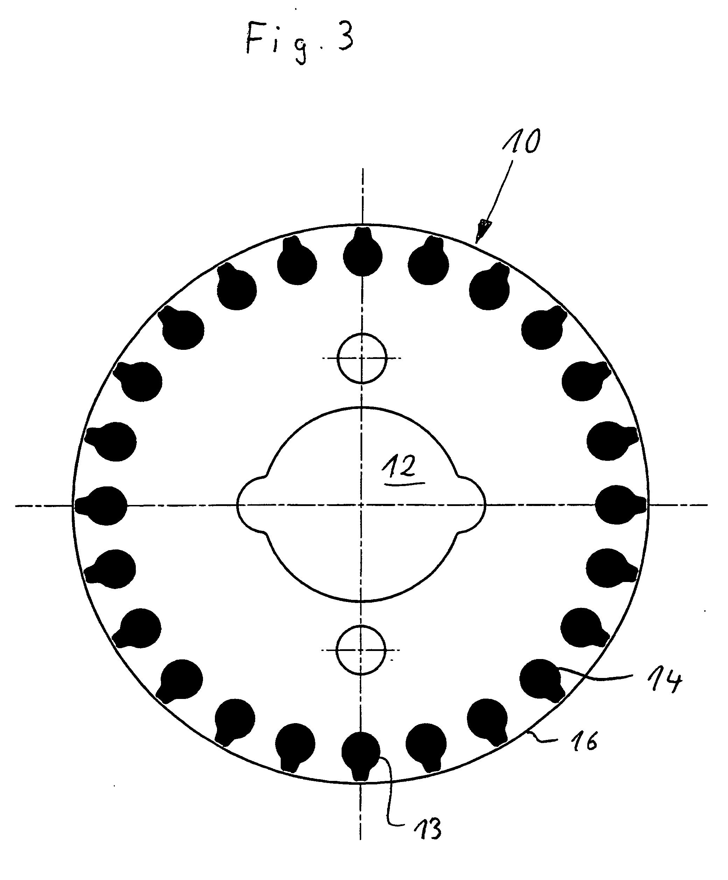

- Fig. 3: in weiter vergrößerter Darstellung einen Querschnitt durch einen Rotor nach der Erfindung und
- Fig. 4: einen Querschnitt durch einen vergleichbaren Rotor nach dem Stand der Technik.

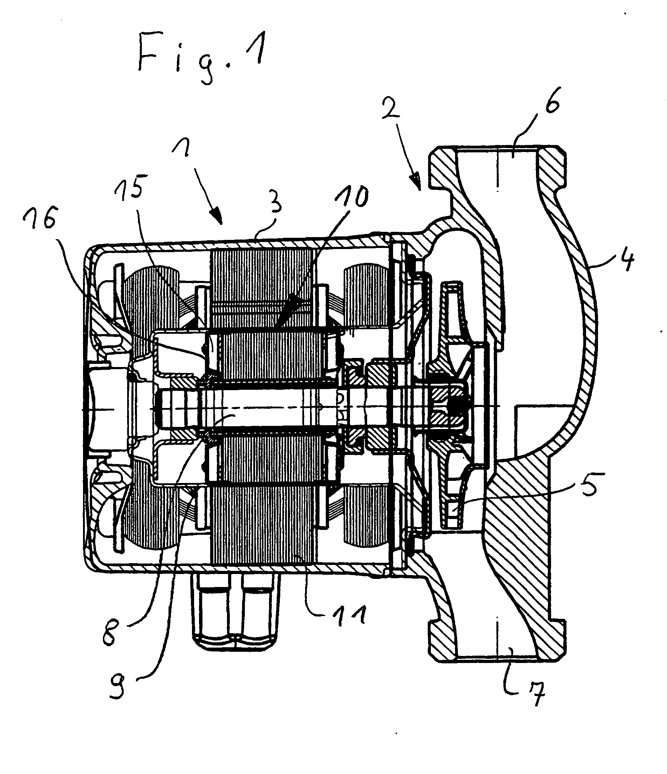

Das anhand von Fig. 1 dargestellte Nasslaufkreiselpumpenaggregat weist einem Elektromotor 1 auf, der eine Kreiselpumpe 2 antreibt. An das den Elektromotor 1 aufnehmende Motorgehäuse 3 schließt sich ein Pumpengehäuse 4 an, in dem ein Kreiselrad 5 der Pumpe läuft. Die Förderflüssigkeit gelangt über einen Saugstutzen 6 zum Saugmund des Kreiselrads 5 und von dort über einen Druckstutzen 7 wieder aus dem Pumpengehäuse 4 heraus.

Das Kreiselrad sitzt auf einer Welle 8, die innerhalb eines Spaltrohrtopfes 9 gelagert ist, der den Pumpenraum gegenüber dem Motorraum abdichtet. Innerhalb des Spaltrohrtopfes 9 sitzt ein Rotor 10 auf der Welle 8, der Teil eines Asynchronmotors bildet, dessen Stator 11 zur anderen Seite des Spaltrohrtopfes 9 innerhalb des Motorgehäuses 3 angeordnet ist.

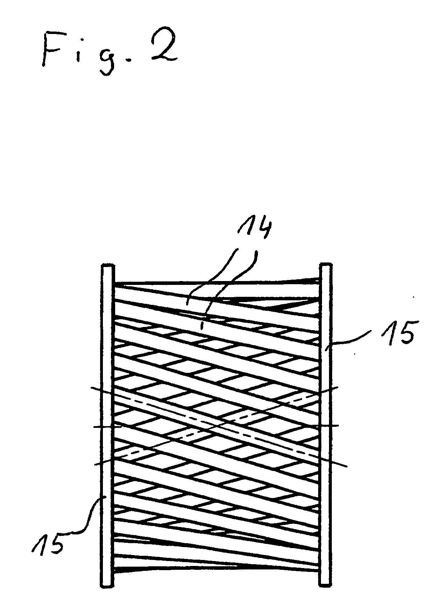

Der Rotor 10 ist aus einem Rotorblechpaket aufgebaut, d. h. aus einer Vielzahl übereinander aufgeschichteter Transformatorbleche, welche eine zentrale Bohrung 12 zur Aufnahme der Welle 8 sowie eine Vielzahl von umfangseitigen Ausnehmungen 13 aufweist, die aus einer nahe dem Umfang gebildeten kreisrunden Ausnehmung sowie einem bis zum Umfang reichenden Kanal gebildet sind. Das Rotorblechpaket ist verschränkt, d. h. die jeweils benachbart übereinander angeordneten Bleche sind, bezogen auf die Ausnehmungen 13, um einen Winkel verschränkt, der sich aus Fig. 2 ergibt. Das so gebildete Rotorblechpaket ist im Bereich der Ausnehmungen 13 mit Kupfer oder einer gut leitenden Kupferlegierung vergossen, so dass die Ausnehmungen 13 vollständig gefüllt sind. Neben dem durch diesen Verguss gebildeten Rotor oder Kurzschlussstäben 14 sind endseitig des Rotorblechpakets Rotorringe 15 vorgesehen, welche die Rotorstäbe 14 kurzschließen und mechanisch festlegen. Diese Rotorringe 15 sind zusammen mit den Rotorstäben 14 gegossen, so dass sich nicht nur ein gut leitender Verbund zwischen Rotorstäben 14 und Rotorringen 15 ergibt, sondern zugleich ein formstabiles Gebilde, welches das Rotorblechpaket formschlüssig und fest zusammenhält.

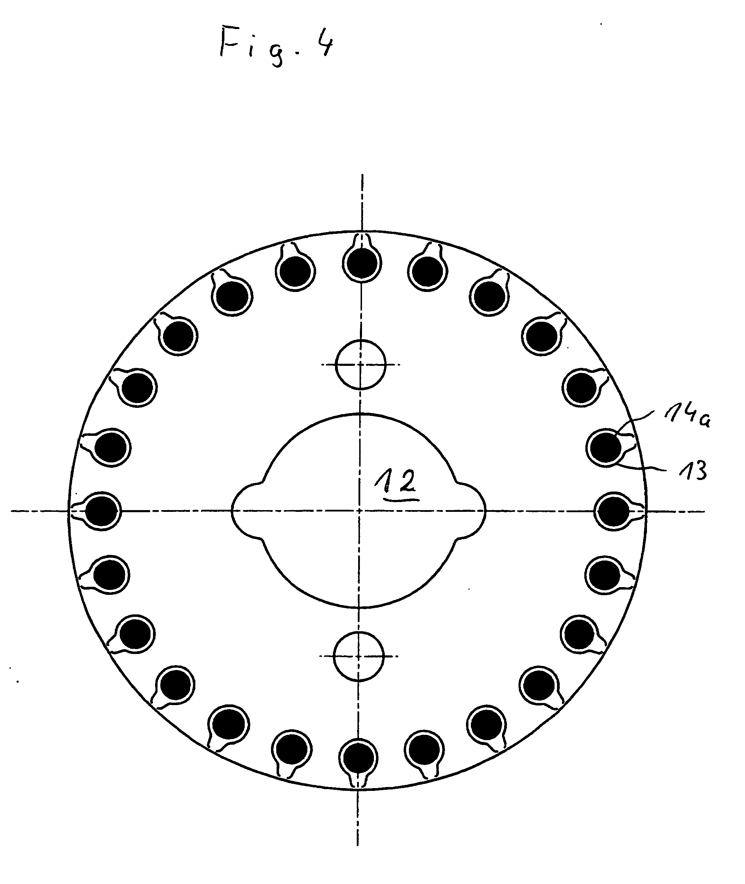

Anhand von Fig. 2 ist dargestellt, wie dieser aus Kupfer oder einer Kupferlegierung gebildete Vergusskörper aussieht, wenn das Rotorblechpaket entfernt ist. Es wird deutlich, dass nicht nur eine sehr gleichmäßige Schrägstellung der Rotorstäbe 14 und somit Verschränkung des Rotorblechpakets erreicht wird, sondern dass zugleich durch dieses käfigartige Gebilde ein inniger Verbund mit dem Rotorblechpaket geschaffen wird. Dabei sind die durch die Ausnehmungen 13 im Rotorblechpaket gebildeten Hohlräume vollständig mit Kupfer oder einer Kupferlegierung vergossen. Zum Vergleich ist in Fig. 4 ein Rotor nach dem Stand der Technik dargestellt, welcher mit konventionell eingedrückten Kupferstäben gebildet ist. Wie diese Darstellung verdeutlicht, ist zwischen Rotorstab 14a und Ausnehmung 13 ein Zwischenraum gebildet. Dieser ist erforderlich einerseits, um die Rotorstäbe 14a überhaupt in das Rotorblechpaket eindrücken zu können, und andererseits, um dieses anschließend noch verschränken zu können. Diese Freiräume entfallen bei der erfindungsgemäßen Lösung. Die durch Verschränken des Rotorblechpakets im Bereich benachbarter Ausnehmungen 13 gebildeten stufenförmigen Absätze werden vollständig durch das Vergussmaterial ausgefüllt. Damit wird ein hoher Kupferfüllgrad und eine hohe magnetische Leitfähigkeit und damit ein verbesserter Wirkungsgrad erreicht.

Der Spaltrohrtopf 9 ist ebenfalls zur Verbesserung des Wirkungsgrads und der magnetischen Leitfähigkeit aus einem rostfreien, ferritischen Stahlblech gebildet, dessen Legierungszusammensetzung weiter oben schon angegeben worden ist.

Um das Rotorblechpaket, die Rotorstäbe 14 und die Rotorringe 15 vor Kontakt mit der im Spaltrohrtopf 9 befindlichen Flüssigkeit zu schützen, ist der Rotor 10 vollständig gekapselt, d. h. mit einem nach außen hermetisch dichtenden Blechmantel 16 versehen. Dieser Blechmantel besteht ebenfalls aus rostfreiem, ferritischem Werkstoff, so dass auch hier eine hohe magnetische Leitfähigkeit gewährleistet ist.

### Bezugszeichenliste

- 1 -: Elektromotor
- 2 -: Kreiselpumpe
- 3 -: Motorgehäuse
- 4 -: Pumpengehäuse
- 5 -: Kreiselrad
- 6 -: Saugstutzen
- 7 -: Druckstutzen
- 8 -: Welle
- 9 -: Spaltrohrtopf
- 10 -: Rotor
- 11 -: Stator
- 12 -: Bohrung
- 13 -: Ausnehmungen
- 14 -: Rotorstäbe
- 14a -: Rotorstäbe nach dem Stand der Technik
- 15 -: Rotorringe
- 16 -: Blechmantel

## Patentansprüche

1. Nasslaufkreiselpumpenaggregat mit einen Asynchronmotor (1), dessen Rotor (10) aus einem Rotorblechpaket aufgebaut ist, das mit aus Kupfer oder einer Kupferlegierung bestehenden Kurzschlussstäben (14) durchsetzt ist, und der in einem Spaltrohr (9) läuft, welches den Pumpenraum gegenüber dem Stator (11) abdichtet, **dadurch gekennzeichnet, dass** das Spaltrohr (9) aus ferritischem, rostfreiem Stahl besteht und dass die Kurzschlussstäbe (14) durch Gießen in das Rotorblechpaket gebildet sind.

2. Nasslaufkreiselpumpenaggregat nach Anspruch 1, **dadurch gekennzeichnet, dass** das Rotorblechpaket verschränkt ist.

3. Nasslaufkreiselpumpenaggregat nach einem der vorhergehenden Ansprüche, **dadurch gekennzeichnet, dass** die Kurzschlussstäbe (14) mit stirnseitig an das Rotorblechpaket anschließenden Rotorringen (15) vergossen sind.

4. Nasslaufkreiselpumpenaggregat nach einem der vorhergehenden Ansprüche, **dadurch gekennzeichnet, dass** das Spaltrohr durch einen Spaltrohrtopf (9) gebildet ist.

5. Nasslautkreiselpumpenaggregat nach einem der vorhergehenden Ansprüche, **dadurch gekennzeichnet, dass** der Rotor (10) mittels eines ferritischen, rostfreien Blechmantels (16) hermetisch gekapselt ist.

6. Nasslaufkreiselpumpenaggregat nach einem der vorhergehenden Ansprüche, **dadurch gekennzeichnet, dass** das Spaltrohr (9) und/oder die Rotorkapselung (16) aus Blech einer Eisenlegierung gebildet ist, welche zwischen 15 und 20 Gewichtsprozent, vorzugsweise zwischen 16 und 18 Gewichtsprozent Chrom enthält.

7. Nasslaufkreiselpumpenaggregat nach einem der vorhergehenden Ansprüche, **dadurch gekennzeichnet, dass** das Spaltrohr (9) und/oder die Rotorkapselung (16) aus Blech einer Eisenlegierung gebildet ist, welche zwischen 0,01 und 0,05 Gewichtsprozent Kohlenstoff enthält.

8. Nasslaufkreiselpumpenaggregat nach einem der vorhergehenden Ansprüche, **dadurch gekennzeichnet, dass** das Spaltrohr (9) und/oder die Rotorkapselung (16) aus Blech einer Eisenlegierung gebildet ist, welche unter 1 Gewichtsprozent Nickel enthält.

9. Nasslaufkreiselpumpenaggregat nach einem der vorhergehenden Ansprüche, **dadurch gekennzeichnet, dass** das Spaltrohr (9) und/oder die Rotorkapselung (16) aus Blech einer Eisenlegierung gebildet ist, welche neben Chrom gemäß Anspruch 6 weitere Legierungselemente enthält, die insgesamt 3 Gewichtsprozent nicht übersteigen.

## Claims

1. A wet-running centrifugal pump unit with an asynchronous rotor (1), whose rotor (10) is constructed of a rotor lamination bundle through which rotor bars (14) consisting of copper or a copper alloy pass, said rotor running in a can (9) which seals the pump space with respect to the stator (11), **characterised in that** the can (9) consists of ferritic, stainless steel and that the rotor bars (14) are formed by casting into the rotor lamination bundle.

2. A wet-running centrifugal pump unit according to claim 1, **characterised in that** the rotor lamination bundle is twisted.

3. A wet-running centrifugal pump unit according to one of the preceding claims, **characterised in that** the rotor bars (14) are cast with rotor rings (15) which connect to the rotor lamination bundle at the end face.

4. A wet-running centrifugal pump unit according to one of the preceding claims, **characterised in that** the can is formed by a capped can (9).

5. A wet-running centrifugal pump unit according to one of the preceding claims, **characterised in that** the rotor (10) is hermetically encapsulated (canned) by way of a ferritic, stainless sheet metal casing (16).

6. A wet-running centrifugal pump unit according to one of the preceding claims, **characterised in that** the can (9) and/or the rotor encapsulation (16) is formed of sheet metal of an iron alloy which contains between 15 and 20 percent by weight, preferably between 16 and 18 percent by weight of chromium.

7. A wet-running centrifugal pump unit according to one of the preceding claims, **characterised in that** the can (9) and/or the rotor encapsulation (16) is formed of a sheet metal of an iron alloy which contains between 0.01 and 0.05 percent by weight of carbon.

8. A wet-running centrifugal pump unit according to one of the preceding claims, **characterised in that** the can (9) and/or the rotor encapsulation (16) is formed of sheet metal of an iron alloy which contain less than 1 percent by weight of nickel.

9. A wet-running centrifugal pump unit according to one of the preceding claims, **characterised in that** the can (9) and/or the rotor encapsulation (16) is formed of sheet metal of an iron alloy which apart from chromium according to claim 6 contains further alloy elements which in total do not exceed 3 percent by weight.

## Revendications

1. Unité de pompe centrifuge à rotor mouillé avec un moteur asynchrone (1), dont le rotor (10) est constitué d'un empilage de tôles de rotor, qui est traversé par des barres de court-circuit (14) à base de cuivre ou d'un alliage de cuivre, et qui est agencé dans une gaine (9), laquelle assure l'étanchéité du compartiment de pompe par rapport au stator (11), **caractérisée en ce que** la gaine (9) est à base d'acier ferritique et inoxydable et **en ce que** les barres de court-circuit (14) sont formées par coulée dans l'empilage de tôles de rotor.

2. Unité de pompe centrifuge à rotor mouillé selon la revendication 1, **caractérisée en ce que** l'empilage de tôles de rotor est entrecroisé.

3. Unité de pompe centrifuge à rotor mouillé selon l'une quelconque des revendications précédentes, **caractérisée en ce que** les barres de court-circuit (14) sont coulées avec des bagues de rotor (15) se raccordant côté avant à l'empilage de tôles de rotor.

4. Unité de pompe centrifuge à rotor mouillé selon l'une quelconque des revendications précédentes, **caractérisée en ce que** la gaine est formée par un pot de gaine (9).

5. Unité de pompe centrifuge à rotor mouillé selon l'une quelconque des revendications précédentes, **caractérisée en ce que** le rotor (10) est encapsulé de façon hermétique au moyen d'une enveloppe de tôle (16) ferritique et inoxydable.

6. Unité de pompe centrifuge à rotor mouillé selon l'une quelconque des revendications précédentes, **caractérisée en ce que** la gaine (9) et/ou l'encapsulage du rotor (16) est formé à base de tôle d'un alliage de fer, qui contient entre 15 et 20 % en poids, de préférence entre 16 et 18 % en poids de chrome.

7. Unité de pompe centrifuge à rotor mouillé selon l'une quelconque des revendications précédentes, **caractérisée en ce que** la gaine (9) et/ou l'encapsulage du rotor (16) est formé de tôle d'un alliage de fer, qui contient entre 0,01 et 0,05 % en poids de carbone.

8. Unité de pompe centrifuge à rotor mouillé selon l'une quelconque des revendications précédentes, **caractérisée en ce que** la gaine (9) et/ou l'encapsulage du rotor (16) est formé de tôle d'un alliage de fer, qui contient moins de 1 % en poids de nickel.

9. Unité de pompe centrifuge à rotor mouillé selon l'une quelconque des revendications précédentes, **caractérisée en ce que** la gaine (9) et/ou l'encapsulage du rotor (16) est formé de tôle d'un alliage de fer, qui contient en plus du chrome selon la revendication 6 d'autres éléments d'alliage qui ne dépassent pas globalement 3 % en poids.
